# FASCICULE DE BREVET EUROPEEN

(11) **EP 1 133 748 B1**
(45) Date de publication et mention de la délivrance du brevet: **18.09.2002**
(21) Numéro de dépôt: 99949073.3
(22) Date de dépôt: 19.10.1999
(51) Int. Cl.: G06K 7/00

(54) **SYSTEME D'AFFICHAGE COMPRENANT UNE CARTE A MICROCIRCUIT ET UN LECTEUR**
ANZEIGESYSTEM MIT EINER CHIPKARTE UND LESEGERÄT
DISPLAY SYSTEM COMPRISING A CHIP CARD AND A READER

(30) Priorité: 26.10.1998 FR 9813375
(43) Date de publication de la demande: 19.09.2001
(73) Titulaire: Xiring, 67552 Vendenheim Cedex (FR)
(72) Inventeur: LIBERMAN, Georges, F-93100 Montreuil-sous-Bois (FR)
(74) Mandataire: Debay, Yves
(86) Numéro de dépôt international: FR9902540
(87) Numéro de publication internationale: WO00025252

(56) Documents cités:
- EP-A- 0 196 929
- WO-A-98/10363
- US-A- 4 843 223

## Description

La présente invention concerne le domaine des systèmes d'affichage susceptibles d'être utilisés pour un porte-monnaie électronique ou pour un jeu, notamment de hasard, pourvus d'une carte à microcircuit et d'un lecteur de carte à microcircuit.

A titre d'exemple, pour la réalisation d'un jeu de type "pari", le joueur se procure au préalable une carte à microcircuit contenant le logiciel du jeu de "pari". Pour plus d'informations sur ce type de jeu, on pourra se reporter au document français 2 747 526 cité à titre de référence.

EP-A-0 196 929 divulgue un dispositif associant une carte à microcircuit avec un lecteur, des indications sous la forme de symboles, chiffres, lettres, etc... inscrites sur différentes cartes coopérant avec un clavier transparent du lecteur pour activer un logiciel spécifique à chaque carte.
Néanmoins, l'affichage est uniquement réalisé par le lecteur, sans interaction visuelle avec les cartes.

US-A-4 843 223 décrit l'utilisation de cartes a microcircuit insérées dans un boîtier lecteur qui comprend des fenêtres aux emplacements correspondant aux parties affichage et clavier respectivement des cartes; néanmoins, il n'y a aucune interaction de ces fenêtres avec les cartes, si ce n'est que l'on voit les parties de cartes au travers de ces fenêtres.

La présente invention a pour objet de proposer un système à lecteur universel adapté à des cartes différentes, chacune prévue pour une utilisation donnée.

La présente invention a pour objet de proposer un système d'affichage dans lequel le moyen d'affichage est adapté à différents types d'utilisations tout en offrant une résolution satisfaisante et un coût très bas.

Le système d'affichage, selon l'invention, comprend une pluralité de cartes à microcircuit et un lecteur de carte à microcircuit. Chaque carte à microcircuit comprend un logiciel et un corps réalisé en matériau synthétique et dans lequel est prévu une interface de communication. Le lecteur comprend un boîtier et un écran d'affichage capable d'afficher différents messages. Le boîtier est pourvu d'une fente apte à recevoir une carte à microcircuit. Une interface de communication est disposée dans la fente pour permettre une liaison électrique entre le lecteur et la carte à microcircuit. Chaque carte à microcircuit comprend une partie d'affichage apte à venir coopérer par superposition avec l'écran d'affichage du lecteur.

Avantageusement, la partie d'affichage de chaque carte est figée à l'aide d'un procédé de marquage tel que gravure, impression ou sérigraphie.

Dans un mode de réalisation de l'invention, le lecteur est prévu pour coopérer avec des cartes pourvues de parties d'affichage différentes.

Dans un mode de réalisation de l'invention, la partie d'affichage de chaque carte est transparente et apte à être disposée au dessus de l'écran d'affichage du lecteur.

Dans un autre mode de réalisation de l'invention, l'écran d'affichage du lecteur est transparent et la partie d'affichage de chaque carte est apte à être disposée sous l'écran d'affichage du lecteur.

Avantageusement, le lecteur comprend des moyens de commande de l'écran d'affichage.

Dans un mode de réalisation de l'invention, le lecteur comprend un moyen de transmission d'informations affichées.

Dans un mode de réalisation de l'invention, le moyen de transmission d'informations comprend un vibreur piézoélectrique apte à transmettre des informations sous la forme d'un code-barre acoustique.

L'invention a également pour objet un lecteur de carte à microcircuit pour système tel que définit dans la revendication 9.

L'invention a également pour objet une carte à microcircuit comprenant un logiciel, et un corps réalisé en matériau synthétique et dans lequel est prévu une interface de communication. La carte à microcircuit comprend une partie transparente d'affichage munie de signes et apte à venir coopérer par superposition avec l'écran d'affichage d'un lecteur de carte à microcircuit, du type comprenant un boîtier et un écran d'affichage capable d'afficher différents messages, le boîtier étant pourvu d'une fente apte à recevoir une carte à microcircuit, une interface de communication étant disposée dans la fente pour permettre une liaison électrique entre le lecteur et la carte à microcircuit.

Ainsi, l'utilisateur acquiert un unique lecteur non spécifiquement dédié à une utilisation, par exemple un jeu ou un compte bancaire, et une carte à microcircuit qui, elle, est dédiée à une utilisation. L'écran d'affichage du lecteur peut se contenter de modifier la luminosité d'une zone particulière de l'écran qui apparaîtra plus claire ou plus sombre. L'utilisateur voit la superposition de cette zone particulière de l'écran et d'une zone correspondante de la partie d'affichage de la carte à microcircuit sur laquelle figure un signe donné, par exemple un nombre, qui se trouve ainsi en contraste lumineux avec le reste de l'afficheur et est donc désigné à l'attention de l'utilisateur. La partie d'affichage de la carte à microcircuit comporte les informations nécessaires à l'utilisation, telles qu'une grille qui peut être gravée, imprimée ou formée par tout autre moyen peu onéreux.

On dispose d'un système d'affichage comprenant un lectéur universel et économique associé à une carte à microcircuit dédiée dont la mémoire comprend les informations nécessaires à l'utilisation, par exemple le logiciel de jeu ainsi que les informations nécessaires à la commande de l'écran d'affichage du lecteur. Cette commande d'affichage est, bien entendu, programmée pour correspondre avec les informations présentes sur la partie d'affichage de la carte à microcircuit. Ainsi un utilisateur ayant acheté un lecteur pourra consulter différentes cartes à microcircuit, notamment sa carte de santé, celle de téléphone, celle de transports publics, celles de fidélité, sa carte porte-monnaie électronique, sa carte de jeu, sa carte d'accès, etc.

La présente invention sera mieux comprise et d'autres avantages apparaîtront à la lecture de la description détaillée d'un mode de réalisation pris à titre d'exemple nullement limitatif et illustré par les dessins annexés, sur lesquels :
la figure 1 est une vue de dessus d'une carte à microcircuit conforme à l'invention;
la figure 2 est une vue de dessus du lecteur conforme à l'invention;
la figure 3 est une vue de dessus du système associant le lecteur et la carte à microcircuit; et
la figure 4 est une vue agrandie en coupe selon IV-IV de la figure 3.

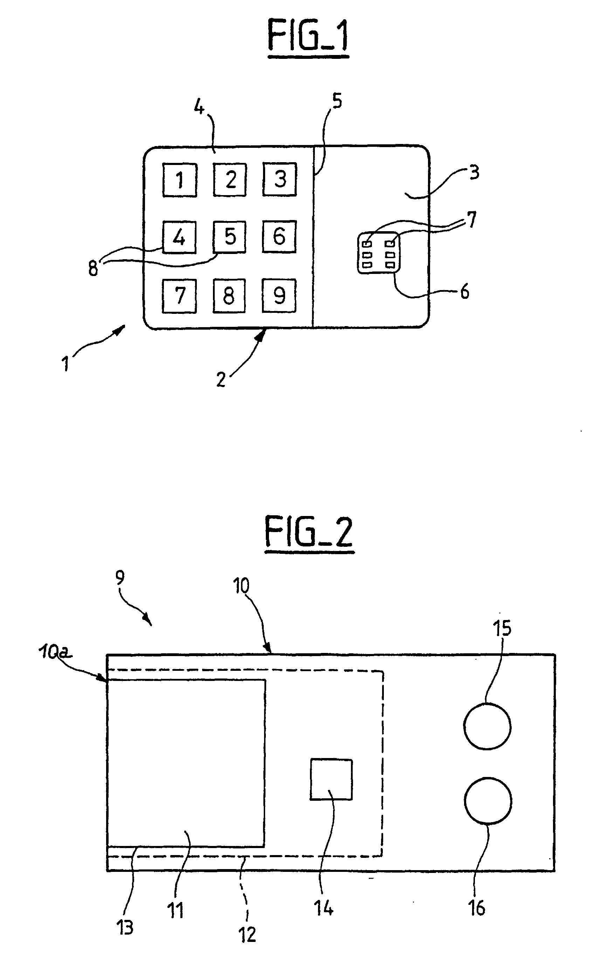

Comme on peut le voir sur la figure 1, la carte à microcircuit 1 est pourvue d'un corps 2 pourvu d'une partie opaque 3 et d'une partie transparente d'affichage 4. Le corps 2 peut être réalisé en matériau synthétique souple et présentera des dimensions standardisées, son épaisseur étant très petite comparée à sa longueur et à sa largeur. La limite entre la partie opaque 3 et la partie d'affichage 4 est une ligne 5 parallèle au petit côté de la carte, la partie d'affichage 4 étant de surface légèrement supérieure à celle de la partie opaque 3. Dans la partie opaque 3, est prévue une interface de communication 6 se présentant sous la forme de plots métallisés conducteurs 7 reliés électriquement à la mémoire, non représentée, contenue dans la carte 1, et permettant à celle-ci de communiquer avec d'autres organes.

La partie d'affichage 4 comprend neuf contours de carrés référencés 8, disposés en trois rangées de trois et numérotés de 1 à 9. Les contours des carrés et les numéros sont opaques et sont formés sur la partie transparente par un procédé de marquage tel que l'impression, la sérigraphie, etc. On comprendra que le marquage effectué sur la partie d'affichage 4 de l'utilisation à laquelle est destinée la carte. Dans d'autres utilisations que celle représentée, on pourra prévoir le marquage de numéros différents, par exemple 1 à 49, avec ou sans cadre, ou encore de lettres, de signes ou de toute autre représentation graphique. Les numéros pourraient également être disposés perpendiculairement à la disposition ici représentée, c'est-à-dire avec la ligne des numéros 1 à 3 parallèle à la largeur. Enfin, on pourrait utiliser des zones opaque et transparente réparties différemment. On pourrait même prévoir un corps 2 de carte à microcircuit 1 entièrement transparent à l'exception de l'interface 6.

Il convient de comprendre que la partie d'affichage 4 est une zone support d'informations destinée à être lue grâce à l'association de la carte à microcircuit 1 et du lecteur qui sera décrit ci-dessous. La zone opaque 3 est une zone qui peut avantageusement supporter des informations telles qu'une notice d'emploi ou une publicité, mais qui n'est pas prévue pour jouer un rôle actif en association avec un moyen d'affichage du lecteur.

Le lecteur 9, illustré sur les figures 2 à 4, comprend un boîtier 10, réalisé par exemple en matériau synthétique, de forme parallélépipédique, et un écran d'affichage 11, par exemple de type LCD. A l'intérieur du boîtier 10, est disposée une unité de commande, par exemple un microprocesseur de type 4 bits, non représentée, apte à commander l'affichage sur l'écran 11. Le boîtier 10 est pourvu d'une fente 12 apte à recevoir une carte à microcircuit 1. La fente 12 s'ouvre sur un des petits côtés d'extrémité 10a du boîtier 10 et est de profondeur telle que l'interface de communication 6 et la partie d'affichage 4 d'une carte 1 se trouvent entièrement dans la fente 12 à l'issue de l'insertion de la carte à microcircuit 1.

L'écran 11 est disposé sous la fente 12 de façon qu'il se trouve sous la carte 1 après insertion. Le châssis 10 comporte également une ouverture 13 formée à partir de sa face supérieure 10b et rejoignant la fente 12 au droit de l'écran 11, l'ouverture 13 débouchant sur le côté 10a. Ainsi, en l'absence de carte à microcircuit, l'écran 11, disposé au fond de l'ouverture 13, est directement visible par l'utilisateur. Après insertion de la carte à microcircuit 1, l'écran 11 se trouve disposé sous la partie transparente d'affichage 4.

A proximité du fond de la fente 12 est disposée une interface de communication 14 apte à coopérer avec l'interface 6 de la carte à microcircuit 1. L'interface de communication 14 peut se présenter sous la forme de lames métalliques souples aptes à venir en contact avec les plots 7 de l'interface 6. L'interface de communication 14 est reliée à l'unité de commande du lecteur 9.

Le lecteur 9 comprend également deux boutons de commande 15 et 16 également en communication avec l'unité de commande. A titre d'exemple, le bouton 15 peut servir à déplacer une zone particulière, plus claire ou plus sombre que le reste de l'écran 11, chaque appui sur le bouton 15 provoquant le déplacement de cette zone particulière dans un autre secteur de l'écran 11. Le bouton 16 peut servir à valider le choix effectué grâce au bouton 15. A titre de variante, on pourrait prévoir d'équiper le lecteur 9 d'un clavier de commande, ou encore de boutons directionnels pour le déplacement de la dite zone.

On insère la carte en présentant l'interface 6 à l'entrée de la fente 12, puis en la glissant dans le sens longitudinal vers le fond de la fente 12. La partie transparente d'affichage 4 se trouve alors au-dessus de l'écran d'affichage 11, autrement dit entre l'écran d'affichage 11 et l'oeil de l'utilisateur. Les interfaces de communication 6 et 14 sont en contact mutuel. L'unité de commande peut alors effectuer une lecture de la mémoire de la carte 1, ce qui lui fournit les informations nécessaires relatives à la nature de l'utilisation et aux zones devant être éclairées ou non sur l'écran d'affichage 11.

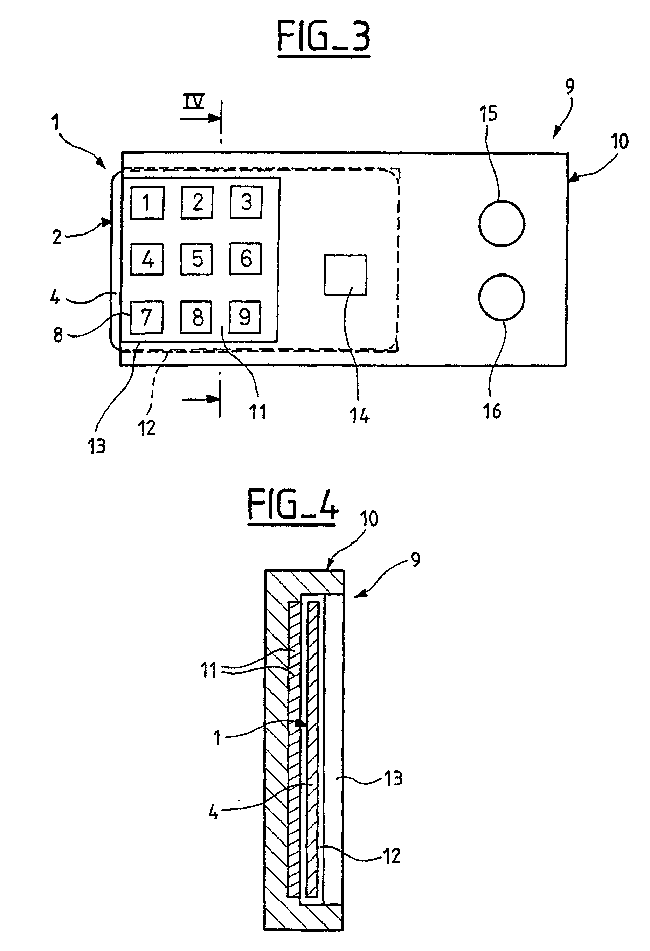

Sur la figure 3, on voit que la mise en contraste du chiffre 1 sur l'afficheur est effectuée lorsque la zone de l'écran 11 disposée sous le chiffre 1 marqué sur la partie transparente d'affichage 4 de la carte à microcircuit 1 est mise en contraste par rapport aux autres zones de l'écran 11. On comprend donc que l'écran d'affichage 11 sert de moyen d'éclairage ou de mise en contraste à la partie d'affichage 4 de la carte à microcircuit.

Grâce au fait que le lecteur 9 ne stocke pas d'informations relatives à l'utilisation, il peut être dépourvu de mémoire ou pourvu d'une mémoire de très faible capacité et donc de faible coût. La carte à microcircuit 1 elle-même ne stocke d'informations que relatives à une utilisation unique d'où une mémoire de carte de taille relativement faible et de coût également faible, ce qui dans le cas d'un jeu évite à l'utilisateur de payer une carte multi-jeux de coût élevé alors que très fréquemment il ne s'intéresse qu'à un seul jeu. L'utilisateur ne supporte donc que le coût relatif à l'utilisation qui l'intéresse.

Une fois que l'utilisateur a effectué son jeu ou son pari grâce aux boutons 15 et 16, l'unité de commande du lecteur 9 effectue l'écriture du jeu choisi dans la mémoire de la carte à microcircuit 1. L'utilisateur se rend alors avec sa seule carte à microcircuit 1 chez un commerçant, par exemple un buraliste, disposant de l'équipement nécessaire et va faire valider son jeu par lecture de sa carte à microcircuit 1 et transfert du jeu effectué sur le système informatique de l'organisateur du jeu ou du pari.

En variante, on peut également prévoir une transmission acoustique, par exemple au téléphone, au moyen d'un vibreur piézoélectrique dont peut être équipé le lecteur 9 et qui permet la transmission d'informations acoustiques relatives au jeu validé par l'utilisateur, par exemple sous la forme d'un code-barre acoustique.

Dans le cas d'une porte-monnaie électronique, le lecteur peut être détenu par l'utilisateur, par exemple pour consulter le solde disponible, ou par le commerçant chez qui un achat est effectué. Bien entendu, le système d'affichage peut s'adapter à d'autres types d'utilisations. Ainsi, avec une carte de santé, on pourra afficher le numéro de Sécurité Sociale, les prescriptions, et les diagnostics. On assure ainsi une partie d'affichage de la carte, le logiciel stocké dans la carte et l'écran du lecteur géré par le microprocesseur du lecteur selon des instructions du logiciel.

Grâce à l'invention, on dispose d'un système d'affichage économique évitant à l'utilisateur d'acheter des moyens qu'il ne souhaite pas utiliser, tels que des jeux supplémentaires et permettant une lecture aisée de l'afficheur grâce à la coopération d'un moyen d'affichage fixe, la carte à microcircuit 1, et d'un moyen d'affichage variable, l'écran 11 du lecteur 9. Bien entendu, on pourrait prévoir une position relative inversée de ces deux moyens d'affichage avec un écran 11 transparent ou semi-transparent disposé au-dessus de la partie d'affichage 4 de la carte à microcircuit 1.

## Revendications

1. Système d'affichage comprenant une pluralité de cartes à microcircuit (1) et un lecteur (9) de carte à microcircuit, chaque carte comprenant, un microcircuit (1) comprenant un logiciel, et un corps (2) réalisé en matériau synthétique et dans lequel est prévu une interface de communication (6), le lecteur (9) comprenant un boîtier (10) et un écran d'affichage (11) capable d'afficher différents messages, le boîtier étant pourvu d'une fente (12) apte à recevoir une carte à microcircuit (1), une interface de communication (14) étant disposée dans la fente pour permettre une liaison électrique entre le lecteur et la carte à microcircuit, **caractérisé par le fait que** chaque carte à microcircuit (1) comprend une partie d'affichage (4) apte à venir coopérer par superposition avec l'écran d'affichage (11) du lecteur.

2. Système selon la revendication 1, **caractérisé par le fait que** la partie d'affichage de chaque carte est figée à l'aide d'un procédé de marquage tel que gravure, impression ou sérigraphie.

3. Système selon la revendication 1 ou 2, **caractérisé par le fait que** le lecteur est prévu pour coopérer avec des cartes pourvues de parties d'affichage différentes.

4. Système selon l'une quelconque des revendications précédentes, **caractérisé par le fait que** la partie d'affichage (4) de chaque carte est transparente et apte à être disposée au dessus de l'écran d'affichage (11) du lecteur.

5. Système selon l'une quelconque des revendications 1 à 3, **caractérisé par le fait que** l'écran d'affichage du lecteur est transparent et que la partie d'affichage de chaque carte est apte à être disposée sous l'écran d'affichage du lecteur.

6. Système selon l'une quelconque des revendications précédentes, **caractérisé par le fait que** le lecteur (9) comprend des moyens de commande (15, 16) de l'écran d'affichage.

7. Système selon l'une quelconque des revendications précédentes, **caractérisé par le fait que** le lecteur comprend un moyen de transmission d'informations affichées.

8. Système selon la revendication 7, **caractérisé par le fait que** le moyen de transmission d'informations comprend un vibreur piézoélectrique apte à transmettre des informations sous la forme d'un code-barre acoustique.

9. Lecteur (9) de carte à microcircuit, chaque carte étant du type comprenant un microcircuit (1) comprenant un logiciel, et un corps (2) réalisé en matériau synthétique et dans lequel est prévu une interface de communication (6), le lecteur (9) comprenant un boîtier (10) et un écran d'affichage (11) capable d'afficher différents messages, le boîtier étant pourvu d'une fente (12) apte à recevoir une carte à microcircuit (1), une interface de communication (14) étant disposée dans la fente pour permettre une liaison électrique entre le lecteur et la carte à microcircuit, **caractérisé par le fait que** le boîtier (10) comprend une ouverture (13) rejoignant la fente (12) au droit de l'écran d'affichage de façon que chaque carte à microcircuit (1) soit apte à venir coopérer par superposition avec l'écran d'affichage.

10. Carte à microcircuit (1) comprenant un microcircuit comprenant un logiciel, et un corps (2) réalisé en matériau synthétique et dans lequel est prévu une interface de communication (6), **caractérisée par le fait qu'**elle comprend une partie transparente d'affichage (4) munie de signes (8) et apte à venir coopérer par superposition avec l'écran d'affichage (11) d'un lecteur (9) de carte à microcircuit, du type comprenant un boîtier (10) et un écran d'affichage (11) capable d'afficher différents messages, le boîtier étant pourvu d'une fente (12) apte à recevoir une carte à microcircuit, une interface de communication (14) étant disposée dans la fente pour permettre une liaison électrique entre le lecteur et la carte à microcircuit.

## Patentansprüche

1. Anzeigesystem, das mehrere Mlikroschaltungskarten (1) und eine Leseeinrichtung (9) für Mikroschaltungskarten umfaßt, wobei jede Karte eine Mikroschaltung (1) mit einer Software sowie einen Körper (2) umfaßt, der aus Kunststoff hergestellt ist und in dem eine Kommunikationsschnittstelle (6) vorgesehen ist, wobei die Leseeinrichtung (9) ein Gehäuse (10) und einen Anzeigeschirm (11) umfaßt, der verschiedene Nachrichten anzeigen kann, wobei das Gehäuse mit einem Schlitz (12) versehen ist, der eine Mikroschaltungskarte (1) aufnehmen kann, wobei in dem Schlitz eine Kommunikationsschnittstelle (14) angeordnet ist, um eine elektrische Verbindung zwischen der Leseeinrichtung und der Mikroschaltungskarte zu ermöglichen, **dadurch gekennzeichnet, daß** jede Mikroschaltungskarte (1) einen Anzeigeabschnitt (4) umfaßt, der durch Überlagerung mit dem Anzeigeschirm (11) der Leseeinrichtung zusammenwirken kann.

2. System nach Anspruch 1, **dadurch gekennzeichnet, daß** der Anzeigeabschnitt jeder Karte mit Hilfe eines Markierungsverfahrens wie etwa eines Ätz-, Druck- oder Siebdruckverfahrens fixiert wird.

3. System nach Anspruch 1 oder 2, **dadurch gekennzeichnet, daß** die Leseeinrichtung dazu vorgesehen ist, mit Karten zusammenzuwirken, die mit unterschiedlichen Anzeigeabschnitten versehen sind.

4. System nach einem der vorhergehenden Ansprüche, **dadurch gekennzeichnet, daß** der Anzeigeabschnitt (4) jeder Karte durchsichtig ist und über dem Anzeigeschirm (11) der Leseeinrichtung angeordnet sein kann.

5. System nach einem der Ansprüche 1 bis 3, **dadurch gekennzeichnet, daß** der Anzeigeschirm der Leseeinrichtung durchsichtig ist und daß der Anzeigeabschnitt jeder Karte unter dem Anzeigeschirm der Leseeinrichtung angeordnet sein kann.

6. System nach einem der vorhergehenden Ansprüche, **dadurch gekennzeichnet, daß** die Leseeinrichtung (9) Steuermittel (15, 16) für den Anzeigeschirm umfaßt.

7. System nach einem der vorhergehenden Ansprüche, **dadurch gekennzeichnet, daß** die Leseeinrichtung ein Mittel zum Senden angezeigter Informationen umfaßt.

8. System nach Anspruch 7, **dadurch gekennzeichnet, daß** das Informationssendemittel einen piezoelektrischen Schwingungserzeuger umfaßt, der Informationen in Form eines akustischen Strichcodes senden kann.

9. Leseeinrichtung (9) für Mikroschaltungskarten, wobei jede Karte von dem Typ ist, der eine Mikroschaltung (1) mit einer Software sowie einen Körper (2) umfaßt, der aus Kunststoff hergestellt ist und in dem eine Kommunikationsschnittstelle (6) vorgesehen ist, wobei die Leseeinrichtung (9) ein Gehäuse (10) und einen Anzeigeschirm (11) umfaßt, der verschiedene Nachrichten anzeigen kann, wobei das Gehäuse mit einem Schlitz (12) versehen ist, der eine Mikroschaltungskarte (1) aufnehmen kann, wobei in dem Schlitz eine Kommunikationsschnittstelle (14) angeordnet ist, die eine elektrische Verbindung zwischen der Leseeinrichtung und der Mikroschaltungskarte ermöglicht, **dadurch gekennzeichnet, daß** das Gehäuse (10) eine Öffnung (13) aufweist. die rechtwinklig zum Anzeigeschirm in den Schlitz (12) mündet, so daß jede Mikroschaltungskarte (1) durch Überlagerung mit dem Anzeigeschirm zusammenwirken kann.

10. Mikroschaltungskarte (1), die eine Mikroschaltung mit einer Software sowie einen Körper (2) umfaßt, der aus Kunststoff hergestellt ist und in dem eine Kommunikationsschnittstelle (6) vorgesehen ist, **dadurch gekennzeichnet, daß** sie einen durchsichtigen Anzeigeabschnitt (4) umfaßt, der mit Zeichen (8) versehen ist und durch Überlagerung mit dem Anzeigeschirm einer Leseeinrichtung (9) für Mikroschaltungskarten des Typs, der ein Gehäuse (10) und einen Anzeigeschirm (11) umfaßt, der verschiedene Nachrichten anzeigen kann, zusammenwirken kann, wobei das Gehäuse mit einem Schlitz (12) versehen ist, der eine Mikroschaltungskarte aufnehmen kann, wobei in dem Schlitz eine Kommunikationsschnittstelle (14) angeordnet ist, die eine elektrische Verbindung zwischen der Leseeinrichtung und der Mikroschaltungskarte ermöglicht.

## Claims

1. Display system comprising a plurality of microcircuit cards (1) and a microcircuit card reader (9), each card (1) comprising a microcircuit comprising software, and a body (2) made of synthetic material and in which there is provided a communication interface (6), the reader (9) comprising a housing (10) and a display screen (11) capable of displaying various messages, the housing being equipped with a slot (12) suitable for receiving a microcircuit card (1), a communication interface (14) being arranged in the slot so as to permit electrical connection between the reader and the microcircuit card, **characterised by** the fact that each microcircuit card (1) comprises a display portion (4) suitable for co-operating by superimposition with the display screen (11) of the reader.

2. System according to Claim 1, **characterised by** the fact that the display portion of each card is fixed using a method of marking such as engraving, printing or silk-screen printing.

3. System according to Claim 1 or 2, **characterised by** the fact that the reader is provided so as to co-operate with cards equipped with different display portions.

4. System according to any one of the preceding claims, **characterised by** the fact that the display portion (4) of each card is transparent and suitable for being arranged on top of the display screen (11) of the reader.

5. System according to any one of Claims 1 to 3, **characterised by** the fact that the display screen of the reader is transparent and that the display portion of each card is suitable for being arranged under the display screen of the reader.

6. System according to any one of the preceding claims, **characterised by** the fact that the reader (9) comprises means (15, 16) for controlling the display screen.

7. System according to any one of the preceding claims, **characterised by** the fact that the reader comprises a means for transmitting displayed information.

8. System according to Claim 7, **characterised by** the fact that the information transmission means comprises a piezoelectric vibrator suitable for transmitting information in the form of an acoustic bar-code.

9. Microcircuit card reader (9), each card being of the type comprising a microcircuit (1) comprising software, and a body (2) made of synthetic material and in which a communication interface (6) is provided, the reader (9) comprising a housing (10) and a display screen (11) capable of displaying various messages, the housing being equipped with a slot (12) suitable for receiving a microcircuit card (1), a communication interface (14) being arranged in the slot in order to allow electrical connection between the reader and the microcircuit card, **characterised by** the fact that the housing (10) comprises an opening (13) joining the slot (12) in line with the display screen so that each microcircuit card (1) is suitable for co-operating by superimposition with the display screen.

10. Microcircuit card (1) comprising a microcircuit comprising software, and a body (2) made of synthetic material and in which a communication interface (6) is provided, **characterised by** the fact that it comprises a transparent display portion (4) provided with signs (8) and suitable for co-operating by superimposition with the display screen (11) of a microcircuit card reader (9), of the type comprising a housing (10) and a display screen (11) capable of displaying various messages, the housing being equipped with a slot (12) suitable for receiving a microcircuit card, a communication interface (14) being arranged in the slot in order to allow electrical connection between the reader and the microcircuit card.
